# EUROPEAN PATENT APPLICATION

(11) **EP 1 754 563 A1**
(43) Date of publication of application: **21.02.2007**
(21) Application number: 06017133.7
(22) Date of filing: 17.08.2006
(51) Int. Cl.: B23K 9/10, B23K 9/133

(54) **Improved contactor for welding wire feeder**

(30) Priority: 17.08.2005 US 205940
(71) Applicant: LINCOLN GLOBAL, INC., Santa Fe Springs CA 90670 (US)
(72) Inventor: Justice, Kenneth L., Wickliffe Ohio 44092 (US)
(74) Representative: Schumacher, Horst

(57) **Abstract**

Portable welding wire feeders for providing welding wire and power to a welding torch, including a contactor with first and second copper or tellurium copper terminal studs, a conductive bridge member movable to electrically connect or isolate the terminals, and an actuator to control movement of the bridge according to a control signal. The contactor may also include a thermal sensor and the wire feeding apparatus may include a control circuit to provide the contactor control signal according to a temperature signal from the thermal sensor and according to a trigger signal from a welding torch.

## Description

### FIELD OF THE INVENTION

The present invention relates generally to arc welding, and more particularly to improved contactors for welding wire feeders.

### BACKGROUND OF THE INVENTION

Welding systems typically include a power source and a wire feeder, as well as a supply of welding electrode wire (typically on a spool), and may also include an optional supply of shielding gas. Welding wire is fed through a torch cable to a welding torch or gun, and electrical power is provided to the torch via electrical wiring in the torch cable. A conductive contact in the welding torch applies the welding power to the electrode for establishing an arc between the exposed portion of the electrode and the workpiece. If external shielding gas is used, for example, in gas metal arc welding (GMAW) processes, the torch cable also includes passageways for providing pressurized gas to shield the welding arc and weld metal from ambient conditions. The wire feeder typically includes a motorized wire feeding system with rollers that direct the welding electrode from a supply reel through a tube in the torch cable, where the wire feeding apparatus may be included within the power source enclosure or may be separately housed. Portable wire feeders are often used in shipyards and other situations where the location of the welding operation changes from time to time and is remote from the power source. A power source cable, also known as an electrode cable, connects electrical power from the power source to the remote wire feeder to power the motorized feeding system and to provide welding current to the welding operation for creating a welding arc. The portable wire feeder is connected to the welding torch by a torch cable having electrical wiring for providing power from the wire feeder to the torch, as well as an internal tube for transporting the wire electrode, where the torch cable may have further optional passageways for transporting shielding gas to the torch and/or for circulating cooling fluid through the torch. Portable wire feeding systems include a housing or enclosure with an input crimp or lug terminal for connecting to the power source cable to a busbar, and an output connected to a torch cable to which the welding power is provided together with the welding wire driven by the motorized wire feeding mechanism.

Portable wire feeders, including the motorized wire feeding system and control circuitry thereof, are generally powered by the arc current from the power source, and include a means for switching the arc current to the welding torch cable, such as a contactor. A trigger on the torch closes a switch to initiate the welding operation, which causes the contactor to provide welding current to the torch cable and also starts the motor for feeding wire to the torch cable. Because the welding arc current flows through and is switched on and off by the contactor of a portable wire feeder, the contactor terminals and conductive components must be capable of withstanding high current levels seen in welding operations, where the welding current typically ranges from about 150 to 350 amps. However, new welding procedures are being proposed for increasing welding productivity, many of which require much higher current levels that may thermally or electrically stress existing wire feeder contactors. However, space, cost, and weight considerations limit the ability to simply include larger contactors within existing portable wire feeder enclosures, and such redesigns do not provide a solution for application of new higher current welding procedures to existing wire feeding systems. Thus, there is a need for improved portable wire feeders and contactors therefor to facilitate provision of welding current to a welding operation in a controlled fashion that allow use of new welding procedures with existing wire feeder designs.

### SUMMARY OF INVENTION

A summary of one or more aspects of the invention is now presented in order to facilitate a basic understanding thereof, wherein this summary is not an extensive overview of the invention, and is intended neither to identify certain elements of the invention, nor to delineate the scope of the invention. Rather, the primary purpose of the summary is to present some concepts of the invention in a simplified form prior to the more detailed description that is presented hereinafter. The invention provides portable welding wire feeding apparatus and contactor switching devices therefor to provide welding wire and power to a welding gun or torch during a welding operation. The wire feeder contactor includes terminal studs made from a substantially zinc free copper material, such as copper or tellurium copper, so as to provide significantly improved thermal and electrical conductivity compared with brass or other stud materials, and the studs may include a contact made of a tin alloy for contacting a conductive bridge member to connect the power source cable to the welding torch cable. In addition, the contactor may include a thermal sensor providing a temperature signal indicating the contactor temperature to allow the wire feeder control circuitry to discontinue welding current if the contactor is overheating. The invention thus facilitates employment of new high current welding procedures in portable wire feeder designs without increasing wire feeder cost, weight, size, etc., and also allows retrofitting of existing wire feeder contactors for such use.

One aspect of the invention relates to a portable welding wire feeding apparatus, comprising a contactor, an output, and a motorized wire feeding system. The contactor includes first and second electrical terminals individually comprising copper studs that are substantially free of zinc, such as having less than about 20 percent zinc by weight, where the first terminal is coupled to a power source cable. In one embodiment, the contactor terminal studs include a body made of copper or tellurium copper with a tin alloy contact. A conductive bridge member is provided in the contactor, which is movable between first and second positions to selectively couple the terminals together or to isolate the terminals, respectively, and the contactor further includes a solenoid or other actuator that selectively moves the bridge member between the first and second positions according to a contactor control signal having corresponding first and second states. The wire feeding apparatus further comprises an output coupled to the second contactor terminal to provide electrical power, as well as a motorized wire feeding system that directs welding wire from a wire supply to the output for providing welding wire to a welding operation through the torch cable. In one embodiment, the contactor comprises a thermal sensor, for example, a thermocouple, a thermostat, a thermistor, an RTD, etc., which can be mounted anywhere in the contactor or a busbar associated therewith, such as directly on one of the terminal studs. In another aspect of the invention, a wire feeder control circuit is provided, which is coupled to the contactor, the output, the thermal sensor, and the wire feeding system, and provides the contactor control signal according to a temperature signal from the thermal sensor and according to a trigger signal from a torch connected to the output.

Another aspect of the invention provides a contactor for a portable welding wire feeding apparatus. The contactor comprises first and second electrical terminals with studs made from substantially zinc free material, such as copper or tellurium copper. The contactor further includes a conductive bridge member movable between a first position that electrically couples the first and second terminals and a second position in which the bridge member is separated from one or both of the terminal, as well as an actuator operable according to a contactor control signal to selectively move the bridge member between the first and second positions. The contactor may further comprise a thermal sensor providing a temperature signal indicating the temperature of the contactor, which is mounted on one of the first and second studs in one embodiment, and the studs may individually comprise a conductive stud contact for making electrical contact with the bridge member, where the stud contact includes a tin alloy.

### BRIEF DESCRIPTION OF THE DRAWINGS

The following description and drawings set forth certain illustrative implementations of the invention in detail, which are indicative of several exemplary ways in which the principles of the invention may be carried out. Other objects, advantages and novel features of the invention will become apparent from the following detailed description of the invention when considered in conjunction with the drawings, in which:
FIGURE 1 is a simplified side elevation view illustrating an exemplary welding system with a portable welding wire feeding apparatus in accordance with one or more aspects of the present invention;
FIGURE 2 is a side elevation view illustrating an exemplary wire feeder contactor in the wire feeding apparatus of FIG. 1, having copper or tellurium copper terminal studs and a thermal sensor in accordance with the invention;
FIGURES 3A and 3B are side and end elevation views, respectively, illustrating an exemplary terminal stud in the wire feeder contactor of FIGURE 2;
FIGURE 4 is a partial side elevation view partially in section, illustrating the exemplary wire feeder contactor of FIGURE 2 with the bridge member in a first closed position to connect the contactor terminal studs to one another; and
FIGURE 5 is a partial side elevation view partially in section, illustrating the exemplary wire feeder contactor of FIGURES 2 and 4 with a bridge member located in a second open position to electrically isolate the contactor terminal studs from one another.

### DETAILED DESCRIPTION OF THE INVENTION

One or more embodiments or implementations of the present invention are hereinafter described in conjunction with the drawings, wherein like reference numerals are used to refer to like elements throughout and wherein the illustrated structures are not necessarily drawn to scale.

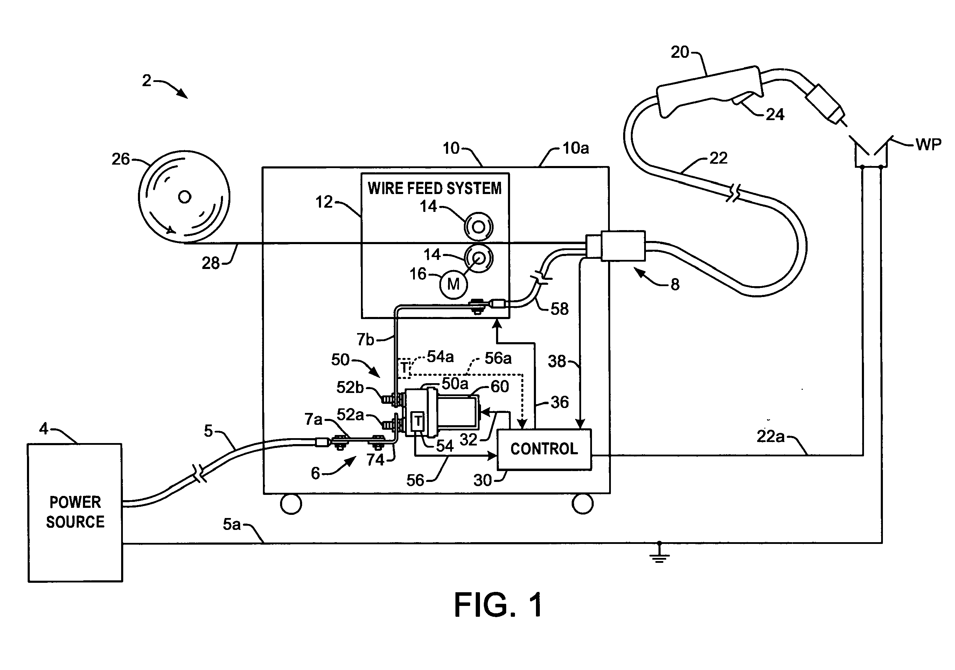

A welding system is illustrated in FIGURE 1, which includes a power source 4, a portable wire feeder 10 and a welding gun or torch 20 coupled to wire feeder 10 by a torch cable 22, with wire feeder 10 providing welding electrode wire 28 from a supply reel 26 to torch cable 22 *via* a motorized welding wire feeding system 12 and an output 8 coupled to torch cable 22. Power source 4 converts input power to provide welding current and voltage waveforms *via* an input cable (electrode lead) 5 for selective application of the welding signal to a welding process through a circuit formed by cable 5, a wire feeder input 6 with a first busbar 7a and a contactor type switching device 50, and through a second (*e.g.*, output) busbar 7b and output cable 58 providing connection from contactor 50 to torch cable 22 at wire feeder output 8. A workpiece ground cable (work lead) 5a is coupled to a workpiece WP and grounded to provide a power current return path, and a workpiece sense cable 22a is provided from workpiece WP to a control circuit 30 in wire feeder 10. Control circuit 30 is coupled to contactor 50, output 8, and wire feeding system 12, and operates to control the operating condition of contactor 50 and wire feeding system 12 by providing a contactor control signal 32 and a wire feed control signal 36 according to a trigger signal 38 from a trigger 24 of torch 20 *via* output 8. In accordance with an aspect of the present invention, moreover, contactor 50 may include a thermal sensor 54 providing a temperature signal 56 to control circuit 30. In this regard, control circuit 30 generates contactor control signal 32 according to temperature signal 56 as well as trigger signal 38, wherein the control circuit provides the contactor control signal 32 in a first state to electrically connect input stud 52a to output stud 52b when torch trigger 24 is actuated and when temperature signal 56 indicates contactor 50 is below a predetermined threshold temperature, and in a second state to electrically isolate studs 52a and 52b from one another when trigger 24 is not actuated or when contactor 50 is at or above the temperature threshold. In this manner, the operating condition of contactor 50 determines whether electrical power is provided to output 8 and hence controls application of welding current to a welding workpiece WP though the torch 20 and cable 22. Motorized feeding system 12 also receives electrical power from the output side of contactor 50 (*e.g.*, from second busbar 7b), such that when contactor 50 is closed in a first position, system 12 provides welding wire 28 from supply reel 26 to torch cable 22 *via* output 8 at a controlled rate. Reel 26 may be internal to or outside of a wire feeder housing enclosure 10a, wherein welding wire 28 is drawn or paid out from supply reel 26 *via* feeding system 12 which includes a motor 16 driving one or more feed rolls 14 so as to direct wire 28 from reel 26 to output 8 for provision of wire 28 to a welding operation through torch cable 22. Wire feed motor 16 may be separately supplied or may be powered by power from power source *via* contactor 50 and output busbar 7b as shown. Wire feeder 10 may also include apparatus (not shown) for directing shielding gas to a welding operation *via* torch cable 22. In operation during a welding procedure, an operator actuates trigger 24 on torch 20, causing activation of on/off signal 32, by which solenoid 60 of contactor 50 electrically connects electrical terminals 52a and 52b to one another. Connection of electrical terminals 52a ands 52b initiates provision of the welding signal from power source 10 through contactor 50 at input 6 of wire feeder 10, where the trigger actuation also controls operation of motorized feeding system 12.

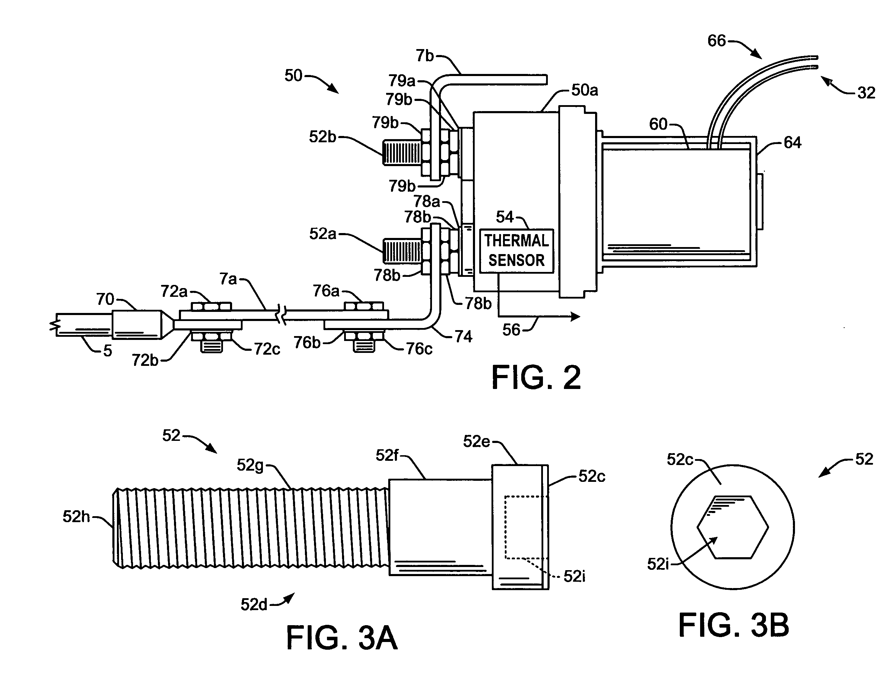

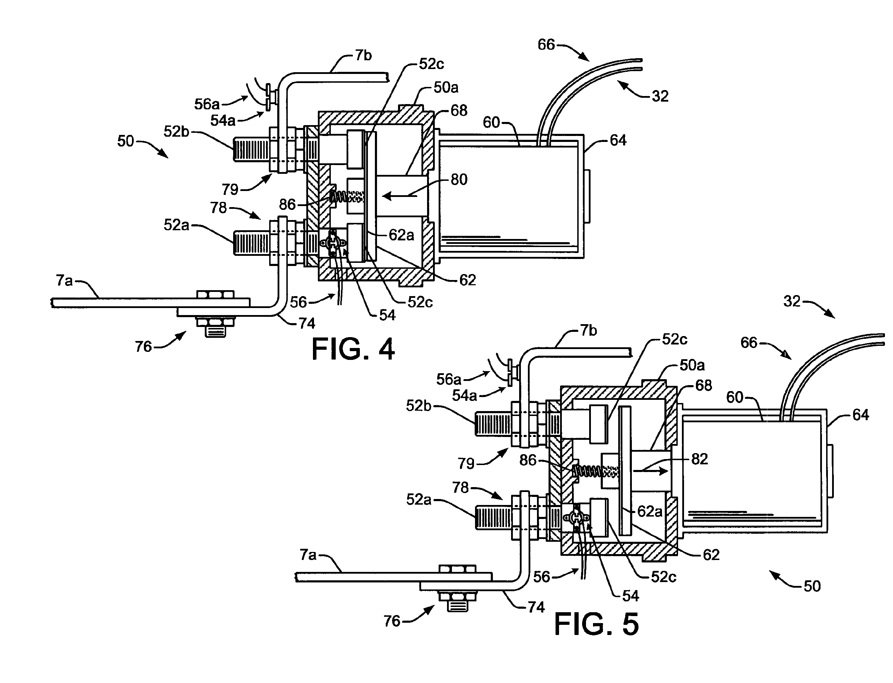

Referring also to FIGURES 2-5, contactor 50 comprises first and second electrical terminals including first and second contactor studs 52a and 52b, respectively, and operates according to contactor control signal 32 from control circuit 30 to selectively provide electrical connection therebetween in a first (*e.g.*, closed) operating condition or position and to electrically separate or isolate electrical terminals 52a and 52a from one another in a second (*e.g.*, open) position. Contactor 50 includes a solenoid actuator 60 with coil leads 66 that moves a conductive bridge member 62 (FIGURES 4 and 5) for selective connection or isolation of terminal studs 52 according to contactor control signal 32 that selectively energizes or deenergizes a coil of contactor solenoid actuator 60. As shown in FIGURES 3A and 3B, contactor terminal studs 52 are made from a copper material substantially free of zinc, such as copper or tellurium copper in the illustrated example, and may include a contact portion 52c (FIGURES 3A and 3B) made of a tin alloy for selectively contacting the moving bridge member 62 inside a contactor housing 50a. The inventor has appreciated that copper, tellurium copper and other substantially zinc free copper provides a cooler thermal junction and hence allows the studs 52 to operate at higher current levels than brass or other conventional contactor terminal studs, thereby allowing wire feeder operation in association with new higher current welding procedures without redesigning for larger contactor studs. This, in turn, allows existing wire feeder contactors to be retrofit with the substantially zinc free copper studs 52 and new wire feeders 10 to be built without increased size, weight, etc. The exemplary studs 52 (FIGURES 3A and 3B) include a copper or tellurium copper body 52d with a head 52e, a cylindrical base 52f, and a threaded portion 52g extending from base 52f to an end 52h, with head 52e including a hexagonal cavity 52i extending through tin alloy contact portion 52c to allow tightening of terminal stud 52 into a contactor housing 50a (FIGURES 4 and 5). As best shown in FIGURE 2, input cable 5 is terminated with a crimp connector 70 fastened to input busbar 7a by a bolt 72a, a washer 72b and a nut 72c, and an L-shaped conductive bar 74 couples busbar 7a to first terminal stud 52a *via* a bolt 76a, washers 76b, 78a, and nuts 76c, 78b. The second contactor terminal stud 52b is coupled to the second or output busbar 7b using a washer 79a and nuts 79b to provide switched power to wire feeding system 12 and output cable 58 when contactor 50 is in the closed condition.

As further illustrated in FIGURES 4 and 5, contactor 50 also includes a conductive bridge member 62 coupled to a shaft 68 of solenoid actuator 60 and movable according to the contactor control signal 32 applied by control circuit 30 to solenoid coil leads 66 between a first position (FIGURE 4) in which bridge member 62 electrically couples the studs 52a and 52b to one another and a second position (FIGURE 5) where bridge member 62 is separated from the studs 52 to thereby electrically isolate the contactor terminals and inhibit current flow to welding torch 20 and wire feeding system 12. Conductive bridge member 62 can be any suitable conductive material, and may include a conductive contact 62a as shown in FIGURES 4 and 5 facing the contacts 52c of terminal studs 52. The contactor 50 also includes a spring 86 to bias the conductive bridge member 62 toward the second (open) position of FIGURE 5, such that upon loss of control signal 32, the contactor 50 goes to a fail safe open position. As shown in FIGURE 4, application of a control signal 32 of a first state to solenoid leads 66 causes the solenoid shaft 68 to move bridge member in a first direction 80 (FIGURE 4) to the first position for connecting the studs 52a and 52b. Applying a second signal state 32 moves the bridge member 62 in a second opposite direction 82 (FIGURE 5) to the second position to effectively separate the bridge member 62 from the studs 52 and thereby electrically isolate studs 52 from one another.

A further aspect of the invention provides a thermal sensor 54 as part of contactor 50, where sensor 54 may be mounted in any suitable location so as to measure the contactor temperature and provide temperature signal 56 to control circuit 30 (FIGURE 1) indicating the temperature of contactor 50. Sensor 54 can be any device that provides and indication of the contactor temperature including a device that provides a binary signal indicating whether the contactor temperature is above or below a predefined threshold temperature, including but not limited to thermocouples, thermostats, thermistors, RTDs, etc. In one implementation shown in FIGURES 4 and 5, thermal sensor 54 is mounted on one of the studs 52. In another possible embodiment, a thermal sensor 54a can be mounted on one of the busbars 7a, 7b to provide a temperature signal 56a to control circuit 30. Control circuit 30 operates to control the operating condition of contactor 50 by providing contactor control signal 32 according to temperature signal 56 (or 56a) from sensor 54 (54a) and according to trigger signal 38 from torch 20 connected to output 8 (FIGURE 1). In the illustrated example, control circuit 30 provides signal 32 in a first state to short studs 52 when torch trigger 24 is actuated and temperature signal 56 (56a) indicates that contactor 50 is below a predetermined threshold temperature. Otherwise, control circuit 30 provides signal 32 in a second state to disconnect studs 52 from one another when trigger 24 is not actuated or when contactor 50 is at or above the threshold temperature. In this manner, thermal sensor 54 and control circuit 30 can selectively inhibit the provision of welding current to torch cable 22 if the input 6 becomes overheated, where the threshold can be selected so as to correspond to high impedance status of the input connection 6 or overheating of studs 52, and temperature signal 56 can optionally be used by control circuit 30 to alter an operator to the high temperature condition.

The invention has been illustrated and described herein with respect to one or more exemplary implementations or embodiments, although equivalent alterations and modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component which performs the specified function of the described component (*i.e.,* that is functionally equivalent), even though not structurally equivalent to the disclosed structure which performs the function in the illustrated implementations of the invention. In addition, although a particular feature of the invention may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising".

## Claims

1. A portable welding wire feeding apparatus, for providing welding wire and electrical power to a welding torch, said wire feeding apparatus comprising:
a contactor including:
a first electrical terminal coupled to a power source cable, said first terminal comprising a first stud made from a copper material substantially free of zinc;
a second electrical terminal comprising a second stud made from a copper material substantially free of zinc;
a conductive bridge member movable between a first position in which said bridge member electrically couples said first electrical terminal to said second electrical terminal and a second position in which said bridge member is separated from at least one of said first and second electrical terminals to electrically isolate said terminals from one another; and
an actuator operable according to a contactor control signal to selectively move said bridge member between said first and second positions, said control signal having a first state in which said actuator moves said bridge member to said first position and a second state in which said actuator moves said bridge member to said second position;
an output coupled to said second contactor terminal to provide electrical power and welding wire to a torch cable; and
a motorized wire feeding system including a motor and a feed roll driven by said motor to direct a welding wire from a wire supply to said output for provision of said welding wire to a welding operation through said torch cable.

2. A portable welding wire feeding apparatus as defined in claim 1, wherein said contactor comprises a thermal sensor.

3. A portable welding wire feeding apparatus as defined in claim 2, wherein said thermal sensor is one of a thermocouple, a thermostat, a thermistor, and an RTD.

4. A portable welding wire feeding apparatus as defined in any one of claims 2-3, wherein said thermal sensor is mounted on one of said first and second studs.

5. A portable welding wire feeding apparatus as defined in any one of claims 2-4, wherein said input further comprises a control circuit coupled to said contactor, said output, said thermal sensor, and said motorized wire feeding system, said control circuit being operable to control the operating condition of said contactor by providing said contactor control signal according to a temperature signal from said thermal sensor and according to a trigger signal from a torch connected to said output.

6. A portable welding wire feeding apparatus as defined in claim 5, wherein said control circuit provides said contactor control signal in said first state when a trigger of the torch is actuated and said temperature signal indicates said contactor is below a predetermined threshold temperature, and wherein said control circuit provides said contactor control signal in said second state when said trigger is not actuated or when said contactor is above said threshold temperature.

7. A portable welding wire feeding apparatus as defined in any one of claims 1-6, wherein said first and second studs individually comprise a copper or tellurium copper body having a threaded body portion and a head, and wherein said studs individually comprise a conductive stud contact for making electrical contact with said bridge member when said bridge member is in said first position.

8. A portable welding wire feeding apparatus as defined in claim 7, wherein said conductive stud contact comprises a tin alloy.

9. A portable welding wire feeding apparatus as defined in any one of claims 1-8, wherein said conductive bridge member comprises a bridge body and a conductive bridge contact for making electrical contact with studs when said bridge member is in said first position.

10. A portable welding wire feeding apparatus as defined in claim 9, wherein said conductive bridge contact comprises a tin alloy.

11. A portable welding wire feeding apparatus as defined in any one of claims 1-10, wherein said actuator is a solenoid.

12. A portable welding wire feeding apparatus as defined in any one of claims 1-11, wherein said first and second studs are made from copper or tellurium copper material.

13. A contactor for a portable welding wire feeding apparatus, said contactor comprising: a first electrical terminal coupled to a power source cable, said first terminal comprising a first stud made from a substantially zinc free copper material; a second electrical terminal comprising a second stud made from a substantially zinc free copper material; a conductive bridge member movable between a first position in which said bridge member electrically couples said first electrical terminal to said second electrical terminal and a second position in which said bridge member is separated from at least one of said first and second electrical terminals to electrically isolate said terminals from one another; and an actuator operable according to a contactor control signal to selectively move said bridge member between said first and second positions, said control signal having a first state in which said actuator moves said bridge member to said first position and a second state in which said actuator moves said bridge member to said second position.

14. A contactor as defined in claim 13, further comprising a thermal sensor providing a temperature signal indicating of the temperature of said contactor.

15. A contactor as defined in claim 14, wherein said thermal sensor is mounted on one of said first and second studs.

16. A contactor as defined in any one of claims 13-15, wherein said first and second studs individually comprise a conductive stud contact for making electrical contact with said bridge member when said bridge member is in said first position, said conductive stud contact comprising a tin alloy.

17. A contactor as defined in any one of claims 13-16, wherein said conductive bridge member comprises a bridge body and a conductive bridge contact for making electrical contact with studs when said bridge member is in said first position, said conductive bridge contact comprising a tin alloy.

18. A contactor as defined in any one of claims 13-17, wherein said first and second studs are made from copper or tellurium copper material.
